(19) Europäisches Patentamt
European Patent Office
Office européen des brevets

(11) **EP 1 825 293 B1**

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(21) Anmeldenummer: **05816292.6**

(22) Anmeldetag: **09.12.2005**

(51) Int Cl.:
**G01S 7/486** *(2006.01)*

(86) Internationale Anmeldenummer:
**PCT/EP2005/013241**

(87) Internationale Veröffentlichungsnummer:
**WO 2006/063739 (22.06.2006 Gazette 2006/25)**

(54) **ELEKTRONISCHES MESSVERFAHREN**

METHOD FOR ELECTRONIC MEASUREMENT

PROCEDE ELECTRONIQUE DE MESURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.12.2004 EP 04030086**

(43) Veröffentlichungstag der Anmeldung:
**29.08.2007 Patentblatt 2007/35**

(73) Patentinhaber: **Leica Geosystems AG
9435 Heerbrugg (CH)**

(72) Erfinder:
• **BENZ, Paul
CH-9444 Diepoldsau (CH)**
• **HINDERLING, Jürg
CH-9437 Marbach (CH)**
• **DE-LANGE, Martin
CH-8593 Kesswil (CH)**

(74) Vertreter: **Harmann, Bernd-Günther
Büchel, Kaminski & Partner
Patentanwälte Est.
Austrasse 79
9490 Vaduz (LI)**

(56) Entgegenhaltungen:
**EP-A- 1 450 128        DE-C1- 10 112 833
US-A- 5 428 439        US-A- 5 889 490**

**Beschreibung**

Die Erfindung betrifft ein elektronisches Messverfahren nach dem Prinzip des Überlagerungsempfangs nach dem Anspruch 1, eine Messvorrichtung nach dem Anspruch 10 und ein Computerprogrammprodukt nach dem Anspruch 9.

Im Bereich der elektronischen Messverfahren sind verschiedene Prinzipien und Verfahren bekannt, wobei nach dem Prinzip des Überlagerungsempfangs hochfrequente Signale zur erleichterten Auswertung durch nichtlineare überlagerung mit einem Mischersignal auf niederfrequente Signale heruntergemischt werden. Die Mischer werden sowohl in Heterodyn- als auch in Homodyn-Empfängern betrieben, um das Eingangssignal in einen anderen Frequenzbereich umzusetzen. Dabei werden je nach Empfängertyp unterschiedliche Mischer-Schaltkreise verwendet, deren Unterschiede dargestellt und qualitativ bewertet werden sollen.

Im Spezialfall des Homodyn-Empfangs stimmen Mischsignal des lokalen Oszillators und zu messende Strahlung in ihrer Modulations-Frequenz überein. Das aus der nichtlinearen Mischung resultierende Schwebungssignal entspricht einem Gleichstromsignal, dessen Größe von der Phasenlage der empfangenen Strahlung gegenüber dem lokalen Oszillator abhängt.

Beim Heterodyn-Prinzip hingegen, erzeugt ein lokaler Oszillator ein Mischersignal das in seiner Frequenz vom modulierten Messsignal abweicht. Das Heterodyn-Prinzip wird beispielsweise bei Entfernungsmessern nach dem Phasendifferenzprinzip verwendet bei welchen elektromagnetische Strahlung im sichtbaren oder infraroten Bereich emittiert wird.

Natürlich sind auch andere Träger, welche im Zusammenhang mit dem Prinzip des Überlagerungsempfangs für Distanzmessung eingesetzt werden bekannt. Ein Beispiel hierfür ist die Radartechnik.

In der Phasenmesstechnik werden amplitudenmodulierte Lichtpulse - üblicherweise sinus- oder rechteckförmige Signale - mit Repetitionsfrequenzen im Bereich von einigen MHz, bis zu einigen GHz ausgesandt. Als Lichtquellen können dazu neben LEDs auch herkömmliche CW - Laserdioden mit Spitzenleistungen von einigen mW verwendet werden. Die mittlere abgestrahlte Energie ist genügend hoch, somit ist die Sichtbarkeit des Laserspots auf dem Ziel für die mit Phasenmessern zu vermessenden Distanzen kein Problem.

Zur Distanzmessung wird die Phasenlage des ausgesandten Signals mit der des zurückkommenden Signals verglichen. Die Phasenverschiebung ist proportional zur Messstrecke. Das von einer Photodiode empfangene HF - Signal wird verstärkt, und mit Hilfe eines Phase-Locked-Loop-(PLL)-geregelten Lokaloszillatorsignals, phasentreu auf ein tieferes Frequenzband herunter gemischt.

Anstelle einer hochfrequenten Signalabtastung, mit Samplingraten im GHz-Bereich, kann mit einem niederfrequenten Empfangssignal wesentlich einfacher gearbeitet werden. Hierbei ist die Abtastung und Analog-Digital-Konversion im niederfrequenten (NF)-Bereich um Grössenordnungen einfacher, genauer und weniger stromkonsumierend. Bei herkömmlichen Phasenmessern wird nur die Grundharmonische des heruntergemischten NF-Signals verwendet.

Zur Erreichung einer genügenden Distanz- oder Absolutmessgenauigkeit werden üblicherweise nacheinander ein interner Lichtweg (Kalibrier- bzw. Referenzstrecke) und ein externer Lichtweg (Messstrecke) gemessen. Auf diese Weise können Veränderungen von Laufzeiten in der Elektronik kalibriert werden. Eine Kalibrierung der Laufzeitveränderungen kann auch mittels zweier identischer, paralleler Empfangskanäle realisiert werden. Genaue Distanzmessung ist bei Phasenmessern nur mit 2 Kanälen möglich. Die Vorteile eines solchen Phasenmessers liegen insbesondere im einfachen Aufbau, der Messung auf NF-Niveau und der erhältlichen zuverlässigen Strahlquellen. Ein grosser Nachteil der Phasenmesser hingegen ist ihre Störanfälligkeit gegenüber ungenügender Unterdrückung von optischem oder elektronischen Crosstalk zwischen Sende- und Empfangskanal, ein weiterer Nachteil ist ihre zumeist geringe Detektions-Empfindlichkeit.

Laufzeit-Entfernungsmesser nach dem Impulsprinzip hingegen weisen diese Nachteile nicht auf, jedoch ist ihre Messgenauigkeit für die geodätische Vermessung oft zu ungenau, insbesondere wenn sub-mm-Genauigkeiten gefordert sind.

Bei Laufzeit-Entfernungsmessern wird ebenfalls ein Lichtpuls ausgesendet, wobei dieser Lichtpuls durch geeignete optische Massnahmen so aufgeteilt wird, dass ein Teil über einen internen Lichtweg (Kalibrierstrecke) direkt zum Empfänger geführt wird, wohingegen der verbleibende Anteil des Lichtes aus dem Gerät über den externen Lichtweg geschickt wird. Der Lichtpuls stellt dabei ein pulsartiges Signal mit einem Intensitätsverlauf dar, der einen Scheitelwert aufweist. Dabei definiert der Scheitelwert bzw. dessen Lage grundsätzlich eine zeitliche Bezugsgrösse zur Ableitung der Signallaufzeit, welche bei geeigneter Auflösung bzw. Auswertung bestimmt werden kann. Der externe Anteil eines Lichtpulses trifft auf ein in einiger Entfernung - der zu vermessenden Distanz - stehendes Ziel (=Messstrecke) und wird von dort wider zurück reflektiert und über eine geeignete Optik zum gleichen Empfänger geführt, wobei der Empfänger zweckmässigerweise eine Photodiode mit nachgeschaltetem Verstärker ist.

Der über den internen Lichtweg geführte Lichtpuls erzeugt im Empfänger einen Referenzpuls, der im weiteren als Startpuls bezeichnet wird. Der über den externen Lichtweg (Messstrecke) geführte Lichtpuls erzeugt im Empfänger den sogenannten Messpuls, der im weiteren als Stoppuls bezeichnet wird.

Da die Längen des internen und des externen Lichtweges unterschiedlich sind, treffen die beiden Lichtpulse zu unterschiedlichen Zeiten beim Empfänger ein. Die Zeitdifferenz zwischen Startpuls und Stoppuls wird als Laufzeit bezeichnet, und ist proportional zum Längenunterschied von interner und externer Lichtstrecke. Die zu messenden Zeitunterschiede sind sehr gering, d.h. sie müssen extrem genau bestimmt werden, um auf eine für ein brauchbares Distanzmesssystem taugliche geodätische Genauigkeit von mm oder sub-mm zu kommen. Die Nachteile der Impuls-Entfernungsmesser liegen in der sehr aufwendigen Vorrichtung zur Zeitmessung. Zur Bestimmung der Laufzeit wird zumeist das Empfangssignal digitalisiert, wozu sehr komplexe hochfrequente elektronische Schaltungen mit Samplingraten im GHz - Bereich notwendig sind.

Die Komplexität der Laufzeitmessung bei einem Impuls-Entfernungsmesser kann unter Anwendung des Heterodyn-Prinzips erheblich vereinfacht werden. Dabei wird ein HF-Impulssignal, welches beispielsweise von einem PLL-geregelten Lokaloszillator mit einer leicht abweichenden Frequenz erzeugt wird, dem Empfangs-Impulszug multiplikativ überlagert. Anders als beim Phasenmesser, werden bei diesem Verfahren sämtliche Oberwellen mitverwendet. Dabei entsteht ein zeitgedehntes Abbild des hochfrequenten Start- und Stoppulses im NF-Bereich. Die Wahl des Faktors für eine sinnvolle Zeitdehnung ist jeweils von der Pulsfrequenz des Senders abhängig. Beispielsweise bei einer Pulsfrequenz von 1 MHz genügt ein Dehnungsfaktor von 1 MHz / (1 MHz / 128) = 128, hingegen bei einer Pulsfrequenz von 100 MHz bedarf es eines Dehnungsfaktors im Bereich von 500 MHz / (1MHz / 128) = 64000.

Der Abstand von Start- und Stoppuls des zeitgedehnten und tiefpass-gefilterten Ausgangssignals kann mit Hilfe einer niederfrequenten Abtastung ($\leq$ 1 MHz) leicht gemessen werden; er ist proportional zur bestimmenden Messstrecke.

Dieses Verfahren hat aber den Nachteil, dass selbst bei einer Auswertung der Oberwellen des NF-transformierten Empfangssignals durch die Zeitdehnung des Empfangssignals (Start - und Stoppuls) ein grosser Teil der im ursprünglichen HF-Signal vorhandenen Zeit- bzw. Distanzinformation verloren geht. Es wird dabei das Nyquistkriterium verletzt, wenn nicht pro Periode der höchsten Oberwelle der HF - Empfangspulse mindestens zwei Abtastpulse vorhanden sind. Dieser Verlust kommt durch das Heterodyne-Prinzip zustande, bei dem, ähnlich wie in einem Subsamplingsystem, zwischendurch HF- Empfangspulse nicht von einem Mischerpuls (=Abtastpuls) getroffen werden. Die Laufzeit-Informationen dieser HF-Empfangspulse werden von der heterodynen Zeit- oder Frequenztransformation nicht erfasst und tragen daher nichts zum NF- Signal bei, weil sie in die Mixer-Lücken fallen.

DE 101 12 833 offenbart ein elektronisches Messverfahren nach dem Prinzip des Überlagerungsempfangs gemäß dem Oberbegriff des Anspruchs 1. Eine Signalverarbeitung unter Benutzung einer harmonischen Modulation mittels eines I/Q-Demodulators ist aus US 5,889,490 bekannt.

Eine Aufgabe der Erfindung besteht darin, ein Messverfahren bzw. eine Messvorrichtung zur Laufzeitbestimmung mit erhöhter Genauigkeit bereitzustellen.

Eine weitere Aufgabe der Erfindung besteht darin, ein Messverfahren bzw. eine Messvorrichtung zur Laufzeitbestimmung mit erhöhter Signalempfindlichkeit bereitzustellen.

Eine weitere Aufgabe der vorliegenden Erfindung ist es, die Nutzung von Signal-Informationen beim Empfang von Signalen nach dem homodynen oder heterodynen Prinzip zu verbessern.

Diese Aufgaben werden durch die Gegenstände des Anspruchs 1 bzw. 10 oder der abhängigen Ansprüche gelöst bzw. die Lösungen weitergebildet.

Die Erfindung stellt sowohl ein neuartiges elektronisches Messverfahren nach dem Prinzip des Überlagerungsempfangs als auch eine entsprechende Messvorrichtung mit mehreren Mischern bereit. Das erfindungsgemässe Messverfahren und die Messvorrichtung sind nicht auf die im folgenden rein exemplarisch dargestellten Varianten des Überlagerungsempfangs mit optischer Strahlung als Träger beschränkt. Beispielsweise können auch Träger im Radio-, Mikrowellen- oder sub-mm-Wellenbereich erfindungsgemäss verwendet werden.

Das erfindungsgemässe Prinzip macht den Verlust an Signalinformation beim Überlagerungsempfang wett, indem HF-Empfangspulse gleichzeitig parallel mit mehreren, phasenverschobenen Mischerpulssignalen auf mehrere separate NF-Signale heruntergemischt werden, wobei diese NF-Signale phasenrichtig aufeinander aufaddiert bzw. kombiniert und zu einem einzigen Empfangssignal zusammengeführt werden können. Weil in diesem parallelen Mischer-System weder Rauschen noch Pulse korreliert sind, verbessert sich das Signal/Rauschverhältnis mit der Anzahl der Mischerkanäle. Phasenrichtige Kombination bedeutet in diesem Zusammenhang, dass die Phasenverschiebung zur Aggregierung genau den Phasenverschiebungen der zugeordneten Mischersignale entspricht. Insofern erfolgt ein phasenrichtiger Einschub der Abtastwerte zwischen die Abtastwerte der anderen Mischersignale. Als Mischersignal kann ein, beispielsweise von einem PLL-geregelten Lokaloszillator erzeugtes, HF-Pulssignal verwendet werden.

Die optimale Anzahl M der verschiedenphasigen Mischersignale hängt von der Pulsdauer und der Impulsperiode Ti der hochfrequenten Sendesignale, insbesondere des Sendesignals mit der höchsten Frequenz $F_i = 1/T_i$ ab. Die maximale Anzahl M der Mischersignale entspricht dem doppelten des Quotienten von Impulsperiode zu Pulsbreite (Pulsdauer). Diese mehreren, an den Ausgängen der Mischerkanäle austretenden Niederfrequenz-Signale können nun phasenrichtig aufeinander aufaddiert bzw. digital kombiniert werden. Das Prinzip beruht somit ein Subsampling mit zwei oder mehr Analogabtastern dar, die untereinander in Phasenverschiebung stehen und zu einem Informationsgewinn führen.

Das erfindungsgemässe elektronische oder elektrooptische Messverfahren und die erfindungsgemässe Messvorrichtung werden nachfolgend anhand von in der Zeichnung schematisch dargestellten Ausführungsbeispielen rein beispielhaft näher beschrieben oder erläutert. Im einzelnen zeigen

Fig.1 die schematische Darstellung des Blockschemas einer Ausführungsform der erfindungsgemässen Messvorrichtung;

Fig.2 die Darstellung der Signale vor und nach dem hochfrequenten, heterodynen Mischen.

Fig.3 die Darstellung der Signale vor und nach dem hochfrequenten, heterodynen Mischen mit vergrössertem Massstab.

Fig.4 die Darstellung der Signale vor und nach dem hochfrequenten, heterodynen Mischen mit vergrössertem Massstab und mit der Darstellung des transformierten Startpulses.

Fig.5 die Darstellung einer in den Niederfrequenzbereich transformierten NF- oder LF-Signalimpulsfolge bestehend aus Start- und Stoppuls.

Fig.6 die schematische Darstellung des Effekts der heterodynen Unterabtastung für den Fall lediglich eines Mischersignals.

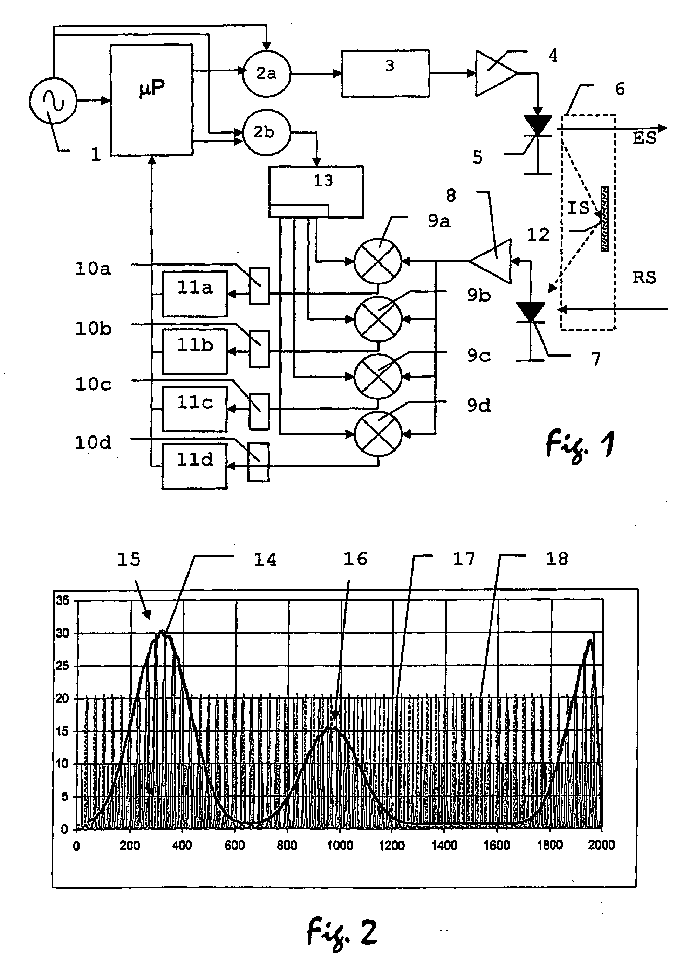

Fig.1 stellt ein Blockschema einer Ausführungsform der erfindungsgemässen Messvorrichtung nach dem Prinzip des Überlagerungsempfangs mit einer gegenüber dem bekannten Verfahren der Phasendistanzmessung wesentlich gesteigerten Empfindlichkeit dar.

Am Anfang der Signalkette steht ein quarzgenauer Referenzoszillator mit einer typischen Ganggenauigkeit von 0.5 ...5ppm. Im Sendekanal befindet sich ein sogenannter direktdigitaler Frequenzsynthesizer 2a. Je nach Programmierung durch den Mikrocontroller oder Mikroprozessor $\mu$P erzeugt Element 2a die gewünschte Frequenz im Bereich von einigen kHz oder MHz. Der Frequenzwandler 3 ist ebenfalls dem Sendekanal zugeordnet und multipliziert die Frequenz in höhere Bereiche, so dass die Messfrequenz Fi resultiert. Zudem wirkt der Frequenzwandler 3 als Filter und gewährleistet die spektrale Signalreinheit. Für die Grobdistanzmessung werden ähnlich wie beim Phasenmesser mehrere, vorzugsweise nahe beieinander liegende Frequenzen $F_i$ gesendet. Eine Treiberstufe 4 wandelt die Steuerfrequenz in elektrische Pulse kurzer Dauer um und treibt die Lichtquelle 5, wie z.B. eine Laserdiode, welche in der Folge eine mit dem elektrischen Pulsverlauf korrelierte Emission mit einem zeitabhängigen Intensitätsanstieg und nach einem Scheitelwert folgenden Intensitätsabfall generiert. Ein Teil dieses peakförmigen Lichtpulses oder -impulses wird als emittiertes Signal ES auf das zu vermessende Zielobjekt gerichtet, der andere Teil wird als internes Signal IS über einen Strahlteiler direkt auf den optischen Empfänger geleitet. Die Anordnung 6 entspricht dem internen Referenzlichtweg, mittels welchem die jeweiligen Startpulse erzeugt werden. Die vom Zielobjekt reflektierten und empfangenen Lichtimpulse werden als reflektierte Signale RS simultan bzw. parallel demselben optischen Empfänger 7 zugeleitet und bilden die Stoppimpulse.

Mit mehreren parallel angeordneten Mischerbausteinen 9a, 9b, 9c, 9d kann der verlustbehaftete Effekt der Signalunterabtastung behoben werden. Bei dieser erweiterten Vorrichtung erzeugt die Frequenzumwandlerstufe 13 beispielsweise vier hochfrequente, zum Sendekanal wiederum leicht frequenzverschobene Steuersignalimpulse. Die Phasen dieser Steuersignale sind vorzugsweise in ganzzahligen Schritten von ($2\pi$/Anzahl Steuersignale) gegeneinander verschoben.

Die Mischerbausteine 9a, 9b, 9c, 9d erzeugen daher auch um diese Phasenschritte verzögerte Signale an deren mit den Tiefpassfiltern 10a, 10b, 10c, 10d zugeordneten Ausgängen. Die zeittransformierten Signale werden praktisch zeitgleich in zugeordneten Analog-Digital-Wandlern 11a 11b, 11c und 11d digitalisiert und vom Mikroprozessor $\mu$P im Speicher abgelegt.

Der beim Überlagerungsempfang durch Unterabtastung erfolgte Verlust am Signal-Rausch-Verhältnis wird im Rahmen eines Postprocessings behoben, indem die vier digitalen Signalimpulsfolgen phasenrichtig und zwar in den vorzugsweise ganzzahligen Schritten von ($2\pi$/Anzahl Steuersignale) zu einer einzigen Signalimpulsfolge additiv akkumuliert werden.

Die Empfindlichkeit des erfinderischen Messverfahrens wird um die Wurzel(M) gegenüber dem herkömmlichen Heterodyn- oder Homodynempfang gesteigert.

Als Messgrösse zur Bestimmung der Laufzeit des Signals über den externen Lichtweg wird für jede Laser-Pulsfrequenz Fi die zeittransformierte relative Verzögerung $x_i$ zwischen dem Stoppuls und dem Startpuls im Verhältnis zum zeittransformierten Pulsabstand $T_i$ als Messgrösse berechnet. Die zeitliche Interpolation zwischen den Abtaststellen des AD-Wandlers lla,llb,llc,lld erfolgt nach der Methode der Kreuzkorrelation oder einer funktionalen Ausgleichmethode.

Die zu bestimmende Distanz errechnet sich nach:

$$D = N_i \cdot L_i + x_i \cdot L_i \tag{1}$$

$N_i$ bezeichnet hierbei die Anzahl der Stoppulse zwischen Distanzmess-Instrument und Zielobjekt und $L_i$ den Pulsabstand zwischen zwei Sendepulsen.

Die Lösung der Mehrdeutigkeit $N_i$ erfolgt beispielsweise nach der Methode der Differenzbildung der zu den Messfrequenzen Fi zugeordneten Messwerten $x_i$. Diese Werte sind langen Impulsperioden zugeordnet, welche vergleichbar sind mit der Länge der längsten eindeutig noch aufzulösenden Distanz, welche dem Fachmann terminologisch als Eindeutigkeitsbereich bekannt ist. Die praxisrelevanten Strategien die Mehrdeutigkeitsparametern $N_i$ aus der Menge der relativen Verzögerungen $x_i$ zu bestimmen sind dem Fachmann, z.B. aus der Auflösung von Phasenmehrdeutigkeiten in der GPS-Algorithmik, bekannt.

Fig.2 zeigt die Darstellung der Signale vor und nach dem hochfrequenten, heterodynen Mischen an lediglich einem der Mischerbausteine. Das HF-Empfangs-Signal 17 mit der Pulsperiode $T_i = 1/F_i$ besteht aus Start- und Stoppulsen und wird durch ein aus Einfachpulsen bestehendes Mischersignal 18 mit einer zur Pulsperiode $1/F_i$ leicht verschobenen Frequenz elektrisch analog gemischt. Am Ausgang des Mischers entsteht ein amplitudenmoduliertes Ausgangssignal mit einer unterlegten hochfrequenten Trägerfrequenz. Die Einhüllende 14 dieses Ausgangssignals weist zwei Signalimpulse auf, der eine ist dem zeittransformierten Startpuls 15 und der andere dem zeittransformierten Stoppuls 16 zugeordnet. Mit der Zeitdehnung der Signale wird - wie bei der herkömmlichen Phasenmessung - der Vorteil ausgenutzt, dass mit kostengünstigen elektronischen Bauteilen und niedrigem Stromverbrauch die Signale im Niederfrequenzbereich weiter verarbeitet und digitalisiert werden können. Zudem wird der Einfluss der systematischen Laufzeitfehler der elektronischen Bauteile um den Zeitdehnungsfaktor der Mischerstufe reduziert, was die Messgenauigkeit der Vorrichtung erheblich fördert. Erfindungsgemäss werden die von wenigstens 2 Mischsignalen erzeugten Ausgangssignale und die daraus bestimmten Laufzeiten kombiniert, d.h. im einfachsten Fall der Erwartungswert berechnet.

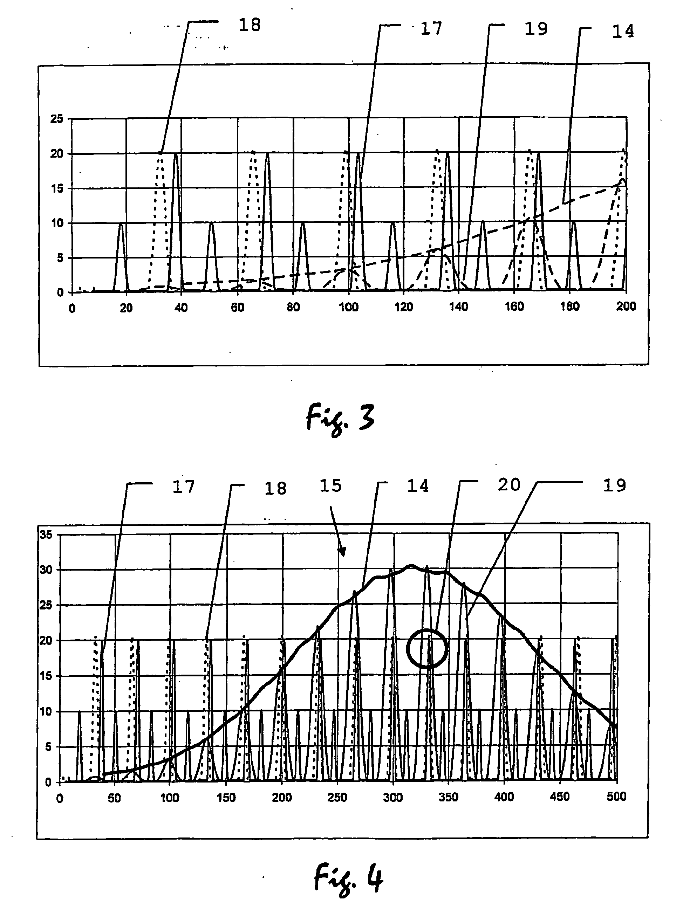

Fig.3 zeigt einen Ausschnitt der Signale von Fig.2 in zeitgedehnter Darstellung. Hier ist gezeigt, wie der Stoppuls im HF-Empfangs-Signal. 17 nicht und der Startpuls lediglich teilweise verstärkt wird. Es wird daher nur der Startpuls zum Ausgang des Mischers geleitet, der Stoppuls geht in dieser Phase verloren. Am Ausgang des Mischers entsteht ein Ausgangssignal 19 mit vergleichbar hoher Frequenz aber mit zusätzlicher Amplitudenmodulation. Dargestellt ist auch die Einhüllende 14 des Ausgangssignals 19. Dieser Verlust an Signalinformation ist beim erfindungsgemässen Messverfahren mit wenigstens 2 zeitgleich wirkenden, aber zueinander phasenverschobenen Mischersignalen nicht oder nur teilweise vorhanden, je nachdem wie stark sich die Anzahl M der Mischersignale vom Doppelten des Quotienten von Impulsperiode zu Pulsdauer des Eingangssignals unterscheidet.

In Fig.4 erfolgt ebenfalls die Darstellung eines vergrösserten Ausschnitts von Fig.2, zudem ist die Einhüllende 14 bzw. der tiefpassgefilterte und zeitgedehnte Startpuls 15 abgebildet. In der exemplarisch dargestellten Region 20 ist die Erfassung des Startpulses im Empfangssignal 17 durch das Mischersignal 18 und damit die Weiterleitung an den Ausgang erkennbar. Der zeitverschobene, kleinere Stoppuls im Empfangssignal 17 wird hingegen vom Mischersignal 18 in dieser Phase nicht erfasst und erscheint daher nicht am Ausgang des Mischers. Weitergeleitet wird ein hochfrequentes, amplitudenmoduliertes Ausgangssignal 19 von welchem die Einhüllende 14 das zeittransformierte Start- oder Stoppsignal beschreibt. Auch dieser Verlust an Signalinformation ist durch das erfindungsgemässe Messverfahren reduziert oder behoben.

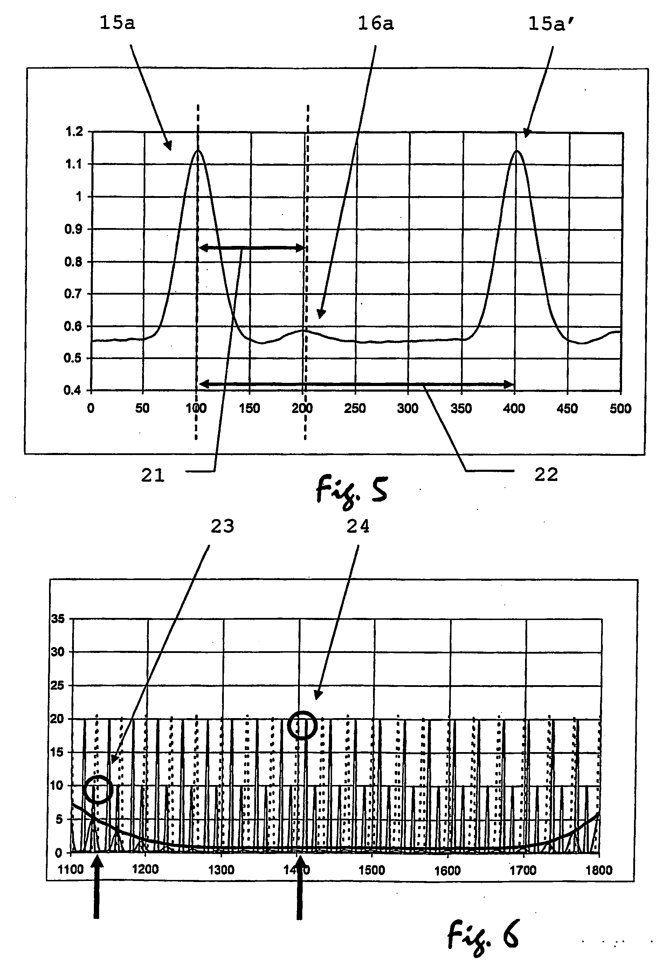

Fig.5 zeigt die Darstellung eines in den Niederfrequenzbereich transformierten Empfangssignals. Die Periode einer Signalimpulsfolge umfasst einen ersten Startpuls 15a und einen Stoppuls 16a, wobei in dieser Darstellung auch ein mit einem zeitgedehnten Pulsabstandsintervall 22 als $L_i$ nachfolgender zweiter Startpuls 15a' erkennbar ist. Die zu bestimmende Messgrösse ist hierbei die Zeit, d.h. die Verzögerung 21, zwischen erstem Startpuls 15a und dem Stoppuls 16a. Nach einer Abtastung mittels eines AD-Wandlers kann die Verzögerung 21 und damit der Zyklus $x_i$ als Verhältnis zwischen Verzögerung 21 und Ti berechnet werden. Die Distanzberechnung zum Zielobjekt wird mittels der Beziehung (1) durchgeführt.

$$D = N_i \cdot L_i + x_i \cdot L_i$$

Zur Lösung der Mehrdeutigkeitsparameter $N_i$, d.h. der Anzahl der Sendepulse zwischen Instrument und Zielobjekt, gibt es mehrere numerische Methoden. So sind aus der Radar- oder GPS-Satelliten-Vermessungstechnik verschiedene geeignete Verfahren bekannt. Zu der bereits erwähnten GPS-Algorithmik gehören Methoden der Differenzbildung, der Linearkombination (LK), insbesondere die Narrowline-LK oder die Widelane-LK.

Im Fall von Mehrfachzielen erscheinen zusätzliche Stoppulse deren Zyklen $x_i$ bei jeder Modulationsendefrequenz Fi, wie in Fig.5 anschaulich dargestellt ist, separat gemessen werden können. Die Möglichkeit auf gestaffelte Zielobjekte Distanz messen zu können ist eine besondere Stärke der erfinderischen Vorrichtung.

Fig.6 verdeutlicht im Falle der bisherigen Überlagerungstechnik den Effekt der heterodynen Unterabtastung. Umfasst die Vorrichtung nur einen einzigen Hochfrequenzmischer mit zugeordnetem impulsartigen Mischersignal, so geht ein Teil der Signalenergie verloren. Dieser verlustbehaftete Effekt ist an den Stellen 24 ersichtlich, an denen der Steuerimpuls des Mischers zwischen Start- und Stoppuls fällt. Um dies zu vermeiden werden erfindungsgemäss im Empfangskanal mehrere Mischerbausteine parallel nebeneinander verwendet. Die Phasen der Steuersignale sind dabei um den Bruchteil der Anzahl der parallelen Mischer gegeneinander verschoben. Dadurch wird gewährleistet, dass mindestens einer der Mischer eine effektive Signalabtastung 23 durchführt und dadurch keine Signalenergie verloren geht. Die Empfindlichkeit einer solchen Empfangsvorrichtung erreicht diejenige eines gepulsten Laufzeitmessers und unterscheidet sich daher erheblich von derjenigen eines herkömmlichen Phasenmessers.

Es versteht sich für den Fachmann, dass die verschiedenen Anordnungen von Komponenten oder Prinzipien miteinander in alternativer oder ergänzender Weise kombiniert werden können.

**Patentansprüche**

1. Elektronisches Messverfahren nach dem Prinzip des Überlagerungsempfangs mit den Schritten

   • Aussenden von gepulster elektromagnetischer Strahlung (ES) mit wenigstens einer Puls-Repetitionsfrequenz, insbesondere von Licht,
   • Empfangen zurückgestreuter Strahlung (RS), wobei die zurückgestreute Strahlung (RS) in ein Empfangssignal (17) umgewandelt wird,
   • Mischen des Empfangssignals (17) mit wenigstens einem impulsartigen Mischsignal (18) zur Erzeugung wenigstens eines Ausgangsignals mit einer gegenüber der Puls-Repetitionsfrequenz niedrigeren Frequenz,
   • Bestimmen wenigstens einer Signallaufzeit aus dem wenigstens einen Ausgangsignal (19),

   **dadurch gekennzeichnet, dass**
   beim Mischen das Empfangssignal (17) mit wenigstens zwei impulsartigen Mischsignalen (18) auf wenigstens zwei Ausgangssignale (19) heruntergemischt wird, wobei die wenigstens zwei Mischsignale (18) gegeneinander phasenverschoben sind.

2. Messverfahren nach Anspruch 1,
   **dadurch gekennzeichnet, dass**
   aus wenigstens zwei Ausgangssignalen (19) ein gemeinsames Aggregat gebildet wird, insbesondere alle Ausgangssignale (19) zu einem gemeinsamen Signalaggregat phasenrichtig kombiniert werden.

3. Messverfahren nach Anspruch 1 oder 2,
   **dadurch gekennzeichnet, dass**
   die Mischsignale (18) nach dem Heterodynverfahren erzeugt und verwendet werden.

4. Messverfahren nach einem der vorangehenden Ansprüche,
   **dadurch gekennzeichnet, dass**
   die maximale Zahl der Mischsignale (18) dem Doppelten des Quotienten von Impulsperiode zu Pulsbreite der Strahlung entspricht.

5. Messverfahren nach einem der vorangehenden Ansprüche,
   **dadurch gekennzeichnet, dass**
   beim Aussenden und Empfangen die Strahlung

   • teilweise über eine geräteexterne Messstrecke auf wenigstens ein zu vermessendes Ziel und
   • teilweise über eine geräteinterne Referenzstrecke (6) geführt wird,

   wobei die über die Referenzstrecke (6) geführte Strahlung (IS) wenigstens einen Startpuls (15,15a,15a') und die über die Messstrecke geführte Strahlung (RS) wenigstens einen Stoppuls (16,16a) definieren, und
   beim Bestimmen wenigstens einer Signallaufzeit wenigstens eine Distanz zu dem wenigstens einen Ziel aus dem wenigstens einen Ausgangssignal (19) ermittelt wird.

**6.** Messverfahren nach Anspruch 5,
**dadurch gekennzeichnet, dass**
die vom Ziel zurückgestreute Strahlung (RS) von einem ersten Empfänger und die über die Referenzstrecke geführte Strahlung (IS) von einem zweiten Empfänger erfaßt werden.

**7.** Messverfahren nach Anspruch 5,
**dadurch gekennzeichnet, dass**
die vom Ziel zurückgestreute Strahlung (RS) und die über die Referenzstrecke geführte Strahlung (IS) von einem gemeinsamen Empfänger (7) erfasst werden, so dass das Empfangssignal (17) Anteile der vom Ziel zurückgestreuten Strahlung (RS) und der über die Referenzstrecke geführten Strahlung (IS) aufweist.

**8.** Messverfahren nach einem der vorangehenden Ansprüche,
**dadurch gekennzeichnet, dass**
eine Kreuzkorrelation wenigstens eines Pulses der den Mischsignalen (18) zugeordneten Ausgangssignale (19) mit einem Referenzsignal erfolgt, insbesondere mit einem synthetisch erzeugten oder aus einer vorangehenden Messung abgespeicherten Referenzsignal.

**9.** Computerprogrammprodukt mit Programmcode, der auf einem maschinenlesbaren Träger gespeichert oder durch eine elektromagnetische Welle verkörpert ist, zur Durchführung des Messverfahrens nach einem der Ansprüche 1 bis 8, insbesondere wenn das Programm in einem Computer ausgeführt wird.

**10.** Messvorrichtung zur Durchführung des Messverfahrens nach einem der Ansprüche 1 bis 8 mit wenigstens

• einer gepulsten Strahlungsquelle (5) zur Erzeugung und zur Emission von Strahlung (ES), insbesondere von Licht,
• einem ersten Empfänger (7) zum Empfang und zur Umwandlung der Strahlung in wenigstens ein Empfangssignal (17),
• einer Komponente zum Bereitstellen von wenigstens einem impulsartigen Mischsignal (18),
• einem ersten Mischer (9a) zum Mischen des Empfangssignals (17) mit einem ersten Mischsignal zur Erzeugung eines ersten Ausgangssignals mit einer gegenüber der Puls-Repetitionsfrequenz niedrigeren Frequenz,
• einem Signal-Prozessor ($\mu$P) zur Verarbeitung des wenigstens einen Ausgangssignals (19),

**gekennzeichnet durch**
wenigstens einen zweiten Mischer (9b-d) zum Mischen des wenigstens einen Empfangssignals (17) mit wenigstens einem zweiten impulsartigen Mischsignal zur Erzeugung wenigstens eines zweiten Ausgangsignals mit einer gegenüber der Puls-Repetitionsfrequenz niedrigeren Frequenz.

**11.** Messvorrichtung nach Anspruch 10,
**dadurch gekennzeichnet, dass**
die Komponente zum Bereitstellen von wenigstens einem impulsartigen Mischsignal (18) zum Erzeugen von wenigstens zwei gegeneinander phasenverschobenen impulsartigen Mischsignalen (18) ausgebildet ist.

**12.** Messvorrichtung nach Anspruch 11,
**dadurch gekennzeichnet, dass**
der erste Mischer (9a) und der wenigstens eine zweite Mischer (9b) als wenigstens zwei mit unterschiedlicher Phase betriebene, parallel geschaltete elektronische Signal-Mischer (9a,9b) in mehrkanaliger Heterodyn-Anordnung ausgebildet sind.

**13.** Messvorrichtung nach Anspruch 10, 11 oder 12,
**gekennzeichnet durch**
eine geräteinterne Referenzstrecke (6), insbesondere wobei die Strahlung gleichzeitig über eine geräteexterne Messstrecke auf wenigstens ein zu vermessendes Ziel und über die geräteinterne Referenzstrecke (6) emittierbar ist.

**14.** Messvorrichtung nach einem der Ansprüche 10 bis 13,
**dadurch gekennzeichnet, dass**
der Signal-Prozessor ($\mu$P) zur Aggregierung von wenigstens zwei Ausgangssignalen (19) ausgebildet ist, insbesondere zur phasenrichtigen Kombination aller Ausgangssignale (19) zu einem gemeinsamen Signalaggregat.

**15.** Messvorrichtung nach einem der Ansprüche 10 bis 14,
**gekennzeichnet durch**
einen zweiten Empfänger zum Empfang der über die Referenzstrecke geführten Strahlung (IS), wobei der erste Empfänger (7) zum Empfang der vom Ziel zurückgestreuten Strahlung (RS) ausgebildet ist.

**16.** Messvorrichtung nach einem der Ansprüche 10 bis 14,
**dadurch gekennzeichnet, dass**
der erste Empfänger (7) zum gemeinsamen Empfang der vom Ziel zurückgestreuten Strahlung (RS) und der über die Referenzstrecke geführten Strahlung (IS) ausgebildet ist, so dass das Empfangssignal (17) Anteile der vom Ziel zurückgestreuten Strahlung (RS) und der über die Referenzstrecke geführten Strahlung (IS) aufweist.

**Claims**

**1.** Method for electronic measurement according to the principle of heterodyne reception, comprising the steps

- emission of pulsed electromagnetic radiation (ES) with at least one pulse repetition frequency, in particular of light,
- reception of back-scattered radiation (RS), the back-scattered radiation (RS) being converted into a received signal (17),
- mixing of the received signal (17) with at least one pulse-like mixed signal (18) for generating at least one output signal with a frequency lower than the pulse repetition frequency,
- determination of at least one signal transit time from the at least one output signal (19),

**characterized in that**, in the mixing, the received signal (17) is mixed with at least two pulse-like mixed signals (18) to give at least two output signals (19), the at least two mixed signals (18) being phase-shifted relative to one another.

**2.** Method for measurement according to Claim 1,
**characterized in that** a common aggregate is formed from at least two output signals (19), in particular all output signals (19) are combined with the correct phase to give a common aggregate signal.

**3.** Method for measurement according to Claim 1 or 2,
**characterized in that** the mixed signals (18) are generated and used according to the heterodyne method.

**4.** Method for measurement according to any of the preceding claims, **characterized in that** the maximum number of mixed signals (18) corresponds to twice the quotient of pulse period to pulse width of the radiation.

**5.** Method for measurement according to any of the preceding claims, **characterized in that**, on emission and reception, the radiation is

- partly guided via a measuring zone outside the device to at least one target to be surveyed and
- partly guided via a reference zone (6) inside the device,

the radiation (IS) guided via the reference zone (6) defining at least one start pulse (15, 15a, 15a') and the radiation (RS) guided via the measuring zone defining at least one stop pulse (16, 16a), and
on determination of at least one signal transit time, at least one distance to the at least one target being determined from the at least one output signal (19).

**6.** Method for measurement according to Claim 5,
**characterized in that** the radiation (RS) back-scattered by the target is picked up by a first receiver and the radiation (IS) guided via the reference zone is picked up by a second receiver.

**7.** Method for measurement according to Claim 5,
**characterized in that** the radiation (RS) back-scattered by the target and the radiation (IS) guided via the reference zone are picked up by a common receiver (7) so that the received signal (17) has components of the radiation (RS) back-scattered by the target and of the radiation (IS) guided via the reference zone.

8. Method for measurement according to any of the preceding claims, **characterized in that** a cross-correlation of at least one pulse of the output signals (19) coordinated with the mixed signals (18) with a reference signal takes place, in particular with a synthetically generated reference signal or a reference signal stored from a preceding measurement.

9. Computer program product comprising program code, which is stored on a machine-readable medium or is embodied by an electromagnetic wave, for carrying out the method for measurement according to any of Claims 1 to 8, in particular if the program is executed in a computer.

10. Measuring apparatus for carrying out the method for measurement according to any of Claims 1 to 8, comprising at least

   • a pulsed radiation source (5) for generating and for emitting radiation (ES), in particular light,
   • a first receiver (7) for receiving and for converting the radiation into at least one received signal (17),
   • a component for providing at least one pulse-like mixed signal (18),
   • a first mixer (9a) for mixing the received signal (17) with a first mixed signal for generating a first output signal with a frequency lower than the pulse repetition frequency,
   • a signal processor ($\mu$P) for processing the at least one output signal (19),

   **characterized by** at least one second mixer (9b-d) for mixing the at least one received signal (17) with at least one second pulse-like mixed signal for generating at least one second output signal with a frequency lower than the pulse repetition frequency.

11. Method for measurement according to Claim 10,
   **characterized in that** the component for providing at least one pulse-like mixed signal (18) is formed for generating at least two pulse-like mixed signals (18) which are phase-shifted relative to one another.

12. Method for measurement according to Claim 11,
   **characterized in that** the first mixer (9a) and the at least one second mixer (9b) are in the form of at least two electronic signal mixers (9a, 9b) in a multichannel heterodyne arrangement which are operated with different phases and are connected in parallel.

13. Measuring apparatus according to Claim 10, 11 or 12, **characterized by** a reference zone (6) inside the device, in particular the radiation being capable of being emitted simultaneously via a measuring zone outside the device to at least one target to be surveyed and via the reference zone (6) inside the device.

14. Measuring apparatus according to any of Claims 10 to 13, **characterized in that** the signal processor ($\mu$P) is formed for aggregation of at least two output signals (19), in particular for combination of all output signals (19) with the correct phase to give a common aggregate signal.

15. Measuring apparatus according to any of Claims 10 to 14, **characterized by** a second receiver for receiving the radiation (IS) guided via the reference zone, the first receiver (7) being formed for receiving the radiation (RS) back-scattered by the target.

16. Measuring apparatus according to any of Claims 10 to 14, **characterized in that** the first receiver (7) is formed for joint reception of the radiation (RS) back-scattered by the target and the radiation (IS) guided via the reference zone, so that the received signal (17) has components of the radiation (RS) back-scattered by the target and of the radiation (IS) guided via the reference zone.

**Revendications**

1. Procédé électronique de mesure, selon le principe de la réception à superposition, comprenant les étapes suivantes :

   • <u>envoi</u> de rayonnement électromagnétique (ES) pulsé, avec au moins une fréquence de répétition d'impulsions, en particulier de lumière,

• réception d'un rayonnement rétrodiffusé (RS), le rayonnement rétrodiffusé (RS) étant converti en un signal de réception (17),
• mélange du signal de réception (17) avec au moins un signal de mélange (18) en forme d'impulsions, pour produire au moins un signal de sortie avec une fréquence plus faible que la fréquence de répétition d'impulsions,
• détermination d'au moins un temps de parcours de signal, à partir du au moins un signal de sortie (19),

**caractérisé en ce que**,
lors du mélange, le signal de réception (17), avec au moins deux signaux de mélange (18) en forme d'impulsions, est remixé en au moins deux signaux de sortie (19), les au moins deux signaux de mélange (18) étant mutuellement déphasés.

2. Procédé de mesure selon la revendication 1,
**caractérisé en ce que**,
à partir d'au moins deux signaux de sortie (19), on forme un agrégat commun, en particulier tous les signaux de sortie (19) sont combinés correctement en phase pour donner un agrégat de signal commun.

3. Procédé de mesure selon la revendication 1 ou 2,
**caractérisé en ce que**
les signaux de mélange (18) sont produits et utilisés selon le procédé hétérodyne.

4. Procédé de mesure selon l'une des revendications précédentes,
**caractérisé en ce que**
le nombre maximal de signaux de mélange (18) correspond au double du quotient de la période d'impulsion par rapport à la largeur d'impulsion du rayonnement.

5. Procédé de mesure selon l'une des revendications précédentes,
**caractérisé en ce que**,
lors de l'envoi et de la réception, le rayonnement est

• partiellement guidé sur une distance de mesure externe à l'appareil, vers au moins une cible à mesurer, et
• partiellement guidé sur une distance de mesure (6) interne à l'appareil,

le rayonnement (IS) guidé sur la distance de référence (6) définit au moins une impulsion de départ (15, 15a, 15a'), et le rayonnement (RS) guidé sur la distance de mesure définit au moins une impulsion d'arrêt (16, 16a), et lors de la détermination d'au moins un temps de parcours de signal, il est procédé à la détermination d'au moins une distance vers la au moins une cible, à partir du au moins un signal de sortie (19).

6. Procédé de mesure selon la revendication 5,
**caractérisé en ce que**
le rayonnement (RS) rétrodiffusé par la cible est détecté par un premier récepteur, et le rayonnement (IS) guidé sur la distance de référence est détecté par un deuxième récepteur.

7. Procédé de mesure selon la revendication 5,
**caractérisé en ce que**
le rayonnement (RS) rétrodiffusé par la cible et le rayonnement (IS) guidé sur la distance de référence sont détectés par un récepteur (7) commun, de manière que le signal de réception (17) présente des proportions du rayonnement (RS) rétrodiffusé par la cible et du rayonnement (IS) guidé sur la distance de référence.

8. Procédé de mesure selon l'une des revendications précédentes,
**caractérisé en ce qu'**
une corrélation croisée d'au moins une impulsion des signaux de sortie (19) associés aux signaux de mélange (18) avec un signal de référence est effectuée, en particulier avec un signal de référence produit de manière synthétique ou mémorisé à l'issue d'une mesure précédente.

9. Produit de programme informatique, avec un code de programme, mémorisé sur un support lisible par machine, ou matérialisé au moyen d'une onde électromagnétique, pour la mise en oeuvre du procédé de mesure selon l'une des revendications 1 à 8, en particulier lorsque le programme est exécuté dans un ordinateur.

**10.** Dispositif de mesure pour la mise en oeuvre du procédé de mesure selon l'une des revendications 1 à 8, comprenant au moins :

   • une source de rayonnement (5) pulsée, pour produire et pour émettre un rayonnement (ES), en particulier de la lumière,
   • un premier récepteur (7), pour recevoir et pour convertir le rayonnement en au moins un signal de réception (17),
   • un composant, pour fournir au moins un signal de mélange (18) en forme d'impulsions,
   • un premier mélangeur (9a), pour mélanger le signal de réception (17) avec un premier signal de mesure, pour produire un premier signal de sortie ayant une fréquence plus basse que la fréquence de répétition d'impulsions,
   • un processeur de signal ($\mu$P), pour traiter le au moins un signal de sortie (19),

   **caractérisé par**
   au moins un deuxième mélangeur (9b-d), pour mélanger le au moins un signal de réception (17) avec au moins un deuxième signal de mélange en forme d'impulsions, pour produire au moins un deuxième signal de sortie ayant une fréquence plus basse que la fréquence de répétition d'impulsions.

**11.** Dispositif de mesure selon la revendication 10,
   **caractérisé en ce que**
   le composant pour fournir le au moins un signal de mélange (18) en forme d'impulsions est réalisé pour produire au moins deux signaux de mélange (18) en forme d'impulsions, déphasés l'un par rapport à l'autre.

**12.** Dispositif de mesure selon la revendication 11,
   **caractérisé en ce que**
   le premier mélangeur (9a) et le au moins un deuxième mélangeur (9b) sont réalisés sous forme d'au moins deux mélangeurs de signaux (9a, 9b) électroniques, branchés en parallèle, fonctionnant avec une phase différente, en un agencement hétérodyne multivoies.

**13.** Dispositif de mesure selon la revendication 10, 11 ou 12,
   **caractérisé par**
   une distance de référence (6) interne à l'appareil, en particulier le rayonnement étant susceptible d'être émis simultanément sur une distance de mesure externe à l'appareil, sur au moins une cible à mesurer, et sur la distance de référence (6) interne à l'appareil.

**14.** Dispositif de mesure selon l'une des revendications 10 à 13,
   **caractérisé en ce que**
   le processeur de signal ($\mu$P) est réalisé pour agréger au moins deux signaux de sortie (19), en particulier pour produire une combinaison en phase correcte de tous les signaux de sortie(19), en donnant un agrégat de signal commun.

**15.** Dispositif de mesure selon l'une des revendications 10 à 14,
   **caractérisé par**
   un deuxième récepteur, pour la réception du rayonnement (IS) guidé sur la distance de référence, le premier récepteur (7) étant réalisé pour la réception du rayonnement (RS) rétrodiffusé par la cible.

**16.** Dispositif de mesure selon l'une des revendications 10 à 14,
   **caractérisé en ce que**
   le premier récepteur (7) est réalisé pour la réception commune du rayonnement (RS) rétrodiffusé par la cible et du rayonnement (IS) guidé sur la distance de référence, de manière que le signal de réception (17) présente des proportions du rayonnement (RS) rétrodiffusé par la cible et du rayonnement (IS) guidé sur la distance de référence.

Fig. 1

Fig. 2

Fig. 3

Fig. 4

15a              16a              15a'

21              22

## Fig. 5

23              24

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10112833

- US 5889490 A